# FASCICULE DE BREVET EUROPEEN

(11) **EP 2 109 247 B1**
(45) Date de publication et mention de la délivrance du brevet: **06.07.2011**
(21) Numéro de dépôt: 09157497.0
(22) Date de dépôt: 07.04.2009
(51) Int. Cl.: H04L 5/14, H04L 25/49

(54) **Détection de données reçues par un dispositif maître dans un protocole de communication unifilaire**
Erfassung von empfangenen Daten mit Hilfe einer Mastereinrichtung in einem eindrahtigen Kommunikationsprotokoll
Detection of data received by a master device in a single-wire communication protocol

(30) Priorité: 08.04.2008 FR 0852330
(43) Date de publication de la demande: 14.10.2009
(73) Titulaire: STMicroelectronics (Rousset) SAS, 13790 Rousset (FR)
(72) Inventeur: Charles, Alexandre, 13390, AURIOL (FR); Conraux, Jérôme, 13530, TRETS (FR); Malherbe, Alexandre, 13530, TRETS (FR); Tramoni, Alexandre, 83370, SAINT AYGULF (FR)
(74) Mandataire: de Beaumont, Michel

(56) Documents cités:
- WO-A-2006/043130
- DE-A1- 10 335 905
- US-A- 4 159 448

## Description

### Domaine de l'invention

La présente invention concerne de façon générale les circuits électroniques et, plus particulièrement, les transmissions de données entre deux dispositifs sur une liaison unifilaire. L'invention s'applique plus particulièrement aux systèmes mettant en oeuvre des protocoles connus sous la dénomination protocole unifilaire (SWP - Single Wire Protocol).

### Exposé de l'art antérieur

Les protocoles de communication unifilaire se définissent entre un dispositif maître et un dispositif esclave partageant une liaison unifilaire pour se transmettre des données de façon bidirectionnelle simultanée (full duplex). Le plus souvent, le signal émis par le dispositif maître à destination du dispositif esclave est en outre un signal d'horloge permettant de synchroniser les échanges. Dans le sens dispositif maître vers dispositif esclave, le rapport cyclique d'un signal périodique est modulé en fonction de l'état binaire à transmettre. Dans le sens dispositif esclave vers dispositif maître, le dispositif esclave module la charge qu'il présente sur la liaison en fonction des états binaires des données qu'il transmet. La détection par le dispositif esclave s'effectue par mesure du rapport cyclique. La détection par le dispositif maître s'effectue en comparant à un seuil le niveau du courant tiré par le dispositif esclave sur la liaison. La modulation de charge par le dispositif esclave s'effectue généralement au rythme du signal périodique, en positionnant la charge pendant les états bas, de façon à ce que la charge à détecter par le dispositif maître soit présente sur tout l'état haut du signal.

Le document US-A-5 903 607 décrit un exemple de codage et de transmission de données entre un circuit maître et un circuit esclave.

Le document WO/2006/043130 décrit un procédé de détermination de l'état binaire d'une donnée émise par un dispositif.

Le débit de communication dans un protocole unifilaire est lié, entre autres, au délai nécessaire à la détection côté dispositif maître. On doit en effet attendre que, suite aux fronts montants du signal, les niveaux s'établissent pour effectuer la comparaison.

Par ailleurs, une détection par niveau est sensible au bruit de la ligne ce qui impose une marge de sécurité relativement importante pour différencier les niveaux.

### Résumé

Il serait souhaitable de disposer d'un protocole de communication unifilaire qui pallie tout ou partie des inconvénients des systèmes usuels.

Il serait notamment souhaitable de pouvoir disposer de débit de communication accru.

Il serait par ailleurs souhaitable de disposer d'un mécanisme de détection, côté dispositif maître, qui soit moins sensible au bruit de la ligne.

Pour atteindre tout ou partie de ces objets ainsi que d'autres, il est prévu un procédé de détermination, par un premier dispositif adapté à émettre un signal à deux états sur une liaison unifilaire à destination d'un deuxième dispositif, de l'état binaire d'une donnée émise par le deuxième dispositif sur ladite liaison, ledit état étant déterminé d'après la pente d'un front montant dudit signal à deux états.

Selon un mode de réalisation, la pente est déterminée à partir du niveau de charge d'un élément capacitif à l'apparition d'un front montant.

Selon un mode de réalisation, le niveau de charge est comparé à un seuil pour déterminer l'état reçu.

Selon un mode de réalisation, la pente du front montant présente une cassure pour un premier état binaire et est régulière pour un deuxième état.

Selon un mode de réalisation, le deuxième dispositif module la charge qu'il présente sur la liaison selon l'état binaire qu'il émet.

Selon un mode de réalisation, ledit signal sert de signal d'horloge au deuxième dispositif.

Selon un mode de réalisation, ledit signal est modulé en rapport cyclique en fonction de données à transmettre du premier dispositif vers le deuxième.

Il est également prévu un dispositif d'émission-réception sur une liaison unifilaire, propre à émettre un signal à deux états à destination d'un autre dispositif susceptible de modifier la charge qu'il présente sur la liaison selon l'état binaire de données qu'il émet en retour, comportant :
un élément de mesure d'une information représentative de la pente des fronts montants dudit signal ; et
un élément de comparaison de ladite information par rapport à un seuil.

Selon un mode de réalisation, le dispositif comporte en outre un élément de commutation de la puissance d'un amplificateur d'émission dudit signal, activé après détection d'un état correspondant à une charge du deuxième dispositif.

Il est également prévu un système de transmission bidirectionnelle simultanée sur une liaison unifilaire entre un dispositif maître et un dispositif esclave.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc d'un système de communication radiofréquence dont au moins un des éléments met en oeuvre, en interne, un protocole de communication unifilaire entre des dispositifs qu'il comporte ;
la figure 2 est un schéma bloc d'un système de communication unifilaire entre un circuit maître et un circuit esclave ;
la figure 3 illustre un exemple d'allure d'un signal de données à émettre par le dispositif maître ;
les figures 4A, 4B et 4C illustrent un exemple de niveaux de tension et de courant dans une application de type routeur de communication à faible distance ;
la figure 5 est un schéma bloc fonctionnel et partiel d'un mode de réalisation d'un dispositif maître ;
la figure 6 représente schématiquement un mode de réalisation du circuit de détection de la figure 5 ; et
les figures 7A à 7E sont des chronogrammes illustrant le fonctionnement du circuit de la figure 6.

### Description détaillée

De mêmes éléments ont été désignés par de mêmes références aux différentes figures dont les chronogrammes ont été tracés sans respect d'échelle. Par souci de clarté, seuls les étapes et éléments utiles à la compréhension de l'invention ont été représentés et seront décrits. En particulier, les mécanismes de génération et d'exploitation des données à transmettre et des données reçues n'ont pas été détaillés, l'invention étant compatible avec les mécanismes usuels. De plus, les différents systèmes et dispositifs matériels susceptibles de mettre en oeuvre les modes de réalisation décrits n'ont pas non plus été détaillés, la mise en oeuvre de l'invention étant compatible avec tout système ou dispositif capable de mettre en oeuvre un protocole unifilaire, plus connu sous la dénomination Single Wire Protocol (SWP).

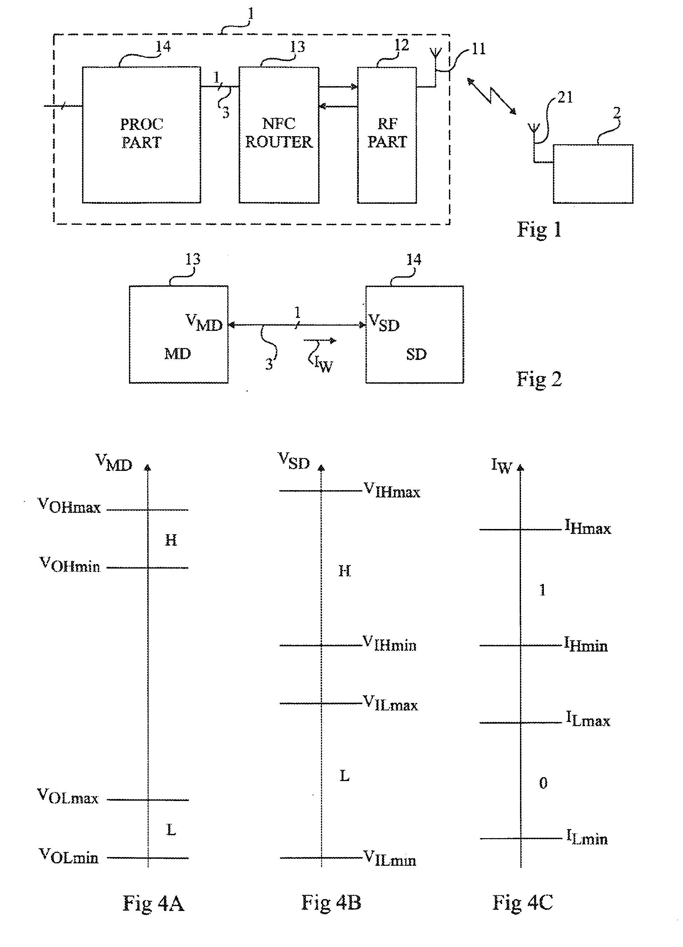

La figure 1 est un schéma bloc d'un système de communication radiofréquence entre un premier élément 1 et un autre élément 2, pourvu chacun d'un circuit d'émission-réception pour communiquer au moyen d'une antenne 11 ou 21. Il s'agit, par exemple, d'un système de communication radiofréquence par couplage inductif. Par exemple, l'élément 2 est un objet radiofréquence de type carte ou lecteur sans contact et l'élément 1 est un objet similaire incluant une partie de traitement de type contact (module d'identification sécurisé (SIM), circuit de traitement d'un téléphone mobile, etc.).

Au moins l'un des éléments (dans l'exemple, l'élément 1) inclut un routeur 13 dit NFC (Near Field Communication) apte à gérer des communications entre une partie radiofréquence 12 (RF PART) et une partie traitement 14 (PROC PART). Le routeur 13 a, entre autres, pour objet de servir d'interface entre la partie radiofréquence avec laquelle il communique de façon bidirectionnelle et la partie de traitement 14 avec laquelle il communique sur un seul fil 3.

Dans ce genre d'application, le protocole full duplex utilisé pour la communication entre le routeur 13 et la partie de traitement 14 est un protocole SWP. Le routeur se comporte en tant que dispositif maître et envoie des données au circuit 14 qui se comporte comme un dispositif esclave.

La figure 2 représente un schéma bloc d'un système de communication uniliaison entre un dispositif maître 13 (MD) et un dispositif esclave 14 (SD) par l'intermédiaire d'une liaison unifilaire 3. Cette figure illustre, de façon plus générale, que les modes de réalisation qui vont être décrits peuvent s'appliquer quel que soit le type de système, pourvu que celui-ci exploite un protocole de communication unifilaire.

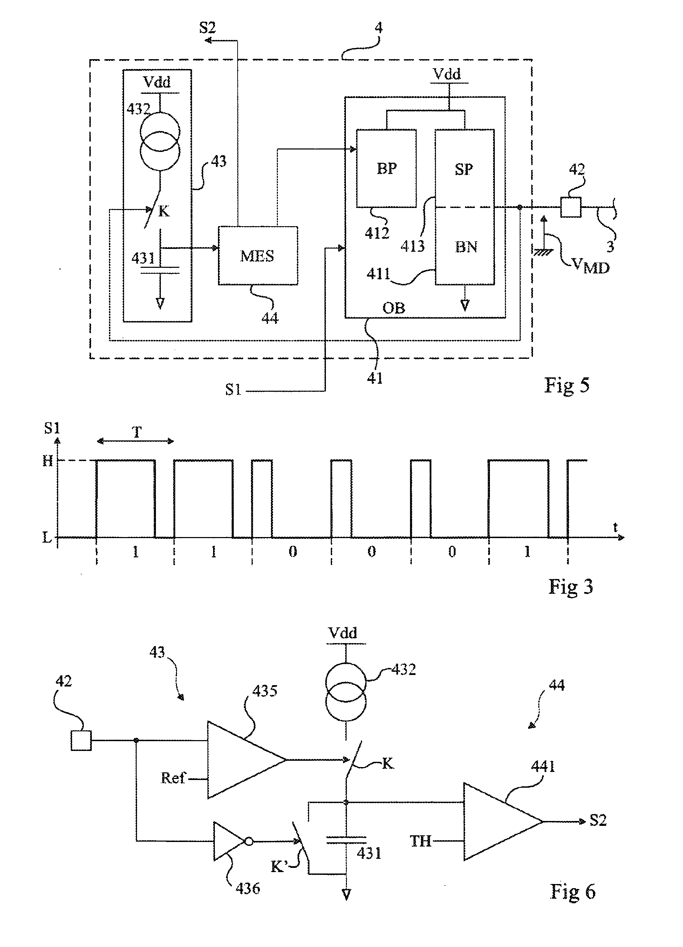

La figure 3 est un chronogramme illustrant un exemple d'allure d'un signal périodique S1 fourni sur la ligne 3 par le dispositif maître 13 et dont le rapport cyclique est fonction d'un train de données numériques à transmettre. Dans l'exemple de la figure 3, la transmission d'un état 1 s'effectue par un niveau haut H sur environ trois quarts de la période d'horloge T (niveau bas L sur un quart de la période T) alors que la transmission d'un état 0 s'effectue par un niveau haut H sur uniquement de l'ordre d'un quart de cette période d'horloge (niveau bas L sur les trois quart restants). Le signal S1 est émis par le dispositif maître au moyen d'un amplificateur de sortie sous la forme d'une tension V_{MD}.

Les figures 4A, 4B et 4C illustrent un exemple de niveaux de tension et de courant utilisés par un protocole unifilaire pour distinguer les états binaires transmis. Ces niveaux ne tiennent pas compte des temps d'établissement des signaux.

La figure 4A illustre les niveaux de tension, respectivement haut H et bas L, qu'est susceptible de prendre le signal V_{MD}. Le protocole définit de façon normalisée une plage de tensions pour les niveaux bas et haut du signal périodique (entre un niveau V_{QLmin} et un niveau V_{OLmax} pour le niveau bas L et entre un niveau V_{OHmin} et un niveau V_{OHmax} pour le niveau haut H). Dans un exemple particulier (norme SWP pour une tension d'alimentation Vdd comprise entre 1,62 et 1,98 volt (classe C)), les niveaux V_{OHmax} et V_{OHmin} sont respectivement de Vdd (par exemple 1,98 volt) et 0,85*Vdd (par exemple 1,377 volt) et le niveau V_{OLmax} est de 0,15*Vdd (par exemple, 0,297 volt), le niveau V_{OLmin} étant la masse (0 volt).

La figure 4B illustre les plages de tension d'un signal V_{SD} correspondant à la tension d'entrée du dispositif esclave 14, donc à l'image du signal V_{MD} côté dispositif esclave. Ces plages définissent les tensions à l'intérieur desquelles ce dispositif 14 considère que le signal reçu est à un niveau haut H ou un niveau bas L. Ces plages sont définies par des niveaux V_{ILmin} et V_{ILmax} pour considérer un signal au niveau haut H et des niveaux V_{IHmin} et V_{IHmax} pour considérer un signal au niveau bas L. Les plages V_{OLmin}-V_{OLmax} et V_{OHmin}-V_{OHmax} sont bien entendu respectivement comprises à l'intérieur des plages V_{ILmin}-V_{ILmax} et V_{IFImin} -V_{IHmax}. La détection du niveau du signal V_{SD} par le dispositif esclave lui sert à reconstituer le signal S1. Le dispositif esclave 14 utilise ce signal à la fois comme signal de synchronisation de ses échanges avec le dispositif maître et, par les durées des niveaux bas, pour détecter les données véhiculées par ce signal.

La figure 4C illustre la modulation de charge opérée par un dispositif esclave 14 sur la liaison unifilaire 3 pour transmettre des données au dispositif maître 13. Cette figure illustre des plages I_{Lmin}-I_{Lmax} et I_{Hmin}-I_{Hmax} du courant I_{W} sur la ligne 3 qui définissent des états binaires 0 et 1 des données transmises par le dispositif esclave. En reprenant l'exemple de programme d'acquisition de systématique ci-dessus, les seuils I_{Lmin} et I_{Lmax} sont respectivement de 0 et d'environ 20 microampères et les seuils I_{Hmin} et I_{Hmax} sont respectivement d'environ 600 microampères et d'environ 1 milliampère.

D'un point de vue temporel, le dispositif esclave 14 utilise les durées pendant lesquelles le signal V_{SD} est au niveau bas pour positionner la charge (donc définir le courant I_{W}) qu'il applique sur la ligne. Ainsi, lorsque le dispositif maître 13 bascule l'état du signal V_{MD} vers l'état haut, il peut évaluer le courant sur la ligne.

Dans les dispositifs usuels, on voit bien que, pour détecter ce niveau de courant, le signal V_{MD} doit être établi au niveau haut. Ce temps d'établissement (qui dépend de la charge appliquée par le dispositif esclave) conditionne donc la durée minimale du niveau haut du signal V_{MD}, donc la durée minimale du niveau haut pour un bit 0 transmis, donc le débit du système.

La figure 5 est un schéma bloc partiel d'un dispositif maître illustrant un mode de réalisation de circuits 4 d'émission du flux périodique S1 et de détermination de l'état binaire S2 de données reçues en retour. Le signal à transmettre (par exemple l'allure de la figure 3) est fourni sous la forme d'un train numérique S1 à un amplificateur de sortie 41 (Output buffer-OB). Cet amplificateur de sortie fournit la tension V_{MD} sur un plot unique 42 de raccordement à la ligne 3. Le signal présent sur le plot 42 est par ailleurs utilisé par le dispositif maître lui-même pour évaluer la pente des fronts montants. Dans l'exemple de la figure 5, le signal V_{MD} sert à fermer un interrupteur K de charge d'un élément capacitif 431 d'un circuit 43 de détection de pente. L'interrupteur K et l'élément capacitif 431 sont en série avec une source de courant 432 entre deux bornes d'application d'une tension d'alimentation Vdd. Le niveau de charge de l'élément 431 est évalué par un circuit de mesure 44 (MES) qui fournit un signal binaire S2 correspondant aux données reçues.

La figure 5 illustre un mode de réalisation préféré de l'amplificateur de sortie 41 selon lequel celui-ci modifie sa puissance d'émission dans le cas d'une charge importante appliquée par le dispositif esclave. L'objectif est, une fois la détection du signal S2 effectuée, de rattraper la pente relativement forte du front montant afin de ne pas retarder l'établissement d'un niveau stable de la tension V_{MD} qui est par ailleurs utilisé côté dispositif esclave pour mesurer les données transmises dans le sens maître-esclave.

Une telle fonctionnalité est par exemple obtenue en commutant, dans l'amplificateur de sortie 41, des circuits de mise à niveau haut (généralement des transistors MOS à canal P) et/ou des circuits de mise à niveau bas (généralement des transistors MOS à canal N) afin de faire varier la puissance de sortie. Dans l'exemple représenté, on suppose la présence d'un seul circuit de mise à niveau bas 411, dimensionné pour une puissance maximale et de deux circuits 412 et 413 de mise à niveau haut respectivement dimensionnés pour une puissance relativement faible (SP) et pour une puissance relativement élevée (BP). Par exemple, on prévoit des tailles différentes pour les transistors MOS à canal P constitutifs des circuits 412 et 413, le transistor à canal N constitutif du circuit 411 étant de même taille que la somme des tailles des transistors à canal P. L'inverse est bien entendu possible.

Le dispositif maître commence par émettre avec l'amplificateur 41 configuré avec le circuit 413 de faible puissance de sorte que la pente d'établissement du signal est conditionnée par la charge présente sur la ligne, donc appliquée par le dispositif esclave. Une fois la détection effectuée, si le dispositif de mesure 44 indique à l'amplificateur 41 la présence d'un état 1, l'amplificateur 41 commute vers le circuit 411 de puissance élevée. Il est alors en mesure de fournir un courant plus important en sortie. Ainsi, même avec une charge plus importante, la pente du front montant devient suffisante.

Le fait d'accélérer le front montant sur charge forte permet d'augmenter le débit de transmission.

La commutation de l'amplificateur de sortie 41 reste cependant optionnelle, en particulier pour le cas où cette augmentation de débit ne soit pas souhaitée. Une détermination de l'état par une interprétation de la pente des fronts montants rend néanmoins le système moins sensible au bruit.

Côté dispositif esclave, l'intervention sur la pente du front montant n'est nullement préjudiciable. A l'inverse, on peut dimensionner les circuits de l'amplificateur de sortie 41 pour que la durée d'établissement du signal V_{MD} soit identique dans les deux cas de charge en provoquant une pente plus importante en fin de front montant sur charge élevée afin de rejoindre le niveau haut approximativement au même instant qu'en cas de charge faible. Cela laisse plus de souplesse dans la réalisation du dispositif esclave car il est alors possible d'y détecter indifféremment les durées des paliers haut ou bas pour reconstituer le signal périodique et décoder le signal reçu.

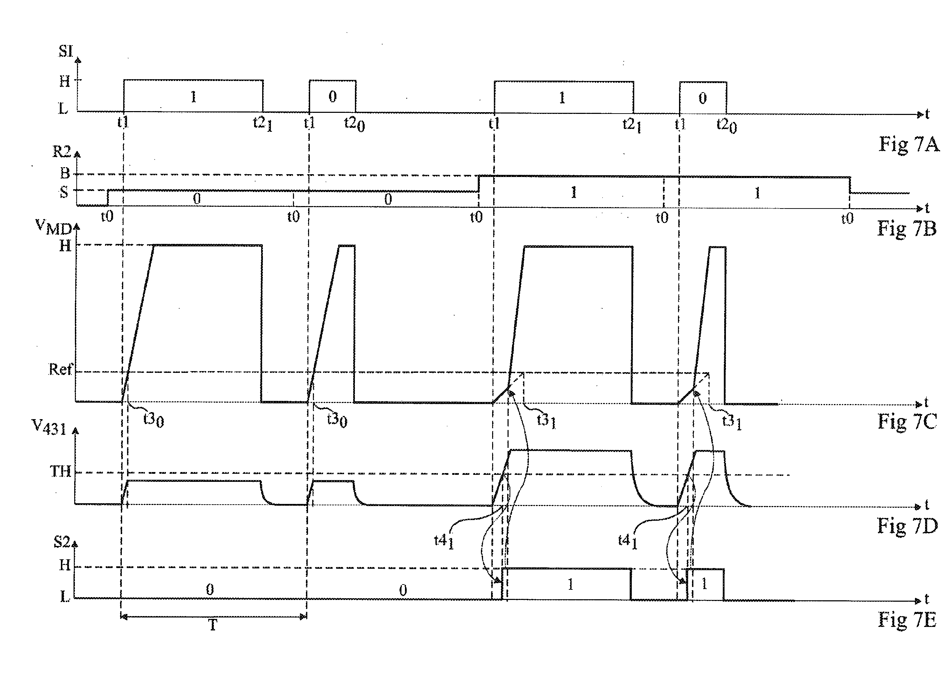

La figure 7 illustre un mode de réalisation des circuits 43 et 44 dans lequel l'interrupteur K (par exemple un transistor de type MOS ou bipolaire) est commandé à l'ouverture par un comparateur 435 de la tension présente sur la borne 42 par rapport à un seuil Ref. Un inverseur 436 du signal sur le plot 42 commande un autre interrupteur K' placé en parallèle sur le condensateur 431 pour le court-circuiter. Ainsi, quand le signal V_{MD} est à l'état bas, l'interrupteur K' est fermé. A l'apparition d'un front montant du signal V_{MD}, (en négligeant les temps d'établissement des signaux dans les éléments 435 et 436), l'interrupteur K est fermé et l'interrupteur K' est ouvert. Le condensateur 431 se charge donc. Sa charge est interrompue quand le niveau du signal V_{MD} atteint le seuil Ref. Le circuit 44 comporte un comparateur 441 du niveau de tension aux bornes du condensateur 431 par rapport à un seuil TH. Le comparateur 441 fournit le signal S2.

Les figures 7A à 7E sont des chronogrammes illustrant le fonctionnement du circuit de la figure 6. Ces chronogrammes représentent respectivement des exemples d'allures du signal S1 du dispositif maître pour transmettre un flux 1010, du niveau de charge R2 présenté par le dispositif esclave sur la ligne pour transmettre un flux 0011, de la tension V_{MD}, de la tension V₄₃₁ aux bornes de l'élément capacitif 431 et du signal S2 détecté par le dispositif maître. Pour simplifier la description qui suit, on néglige les temps de propagation dans les circuits.

A chaque période T du signal S1, celui-ci commute au niveau haut à un instant t1, puis au niveau bas à un instant t2₀ pour la transmission d'un 0 ou t2₁ postérieur pour la transmission d'un 1. A un instant t0 qui précède chaque instant t1, c'est-à-dire pendant la partie à l'état bas L de la période T qui précède, le dispositif esclave positionne sa charge entre une charge maximale ou relativement élevée, par exemple pour transmettre un 1, ou minimale ou relativement faible (par rapport à la charge relativement élevée) pour alors transmettre un 0. Cela est illustré par deux niveaux S (faible charge) et B (forte) d'un signal R2 (figure 7B). Dans l'exemple, on suppose que le signal R2 passe d'un niveau à l'autre si besoin à chaque instant t0. Généralement dans un protocole SWP, il existe un état d'attente de communication dans lequel les signaux S1 et S2 sont respectivement 1 et 0. Le dispositif esclave provoque la sortie de cet état en commutant sa charge.

A chaque instant t1, le signal V_{MD} commence à croître ce qui provoque l'ouverture de l'interrupteur K' (en pratique dès que le niveau de tension est suffisant pour faire commuter l'inverseur 436) et la fermeture de l'interrupteur K. La charge du condensateur 431 commence donc à peu près à l'instant t1. La pente de la tension V₄₃₁ est fixée par la source de courant 432, de préférence à courant constant. Par contre, la pente de la tension V_{MD} dépend du niveau B ou S de la charge imposée par le dispositif esclave. On tire profit de cette différence de pente pour détecter le niveau 0 ou 1 transmis.

Avec une faible charge S (transmission d'un état 0), la pente est plus importante qu'avec une forte charge B (transmission d'un état 1). Par conséquent, la tension V_{MD} atteint le seuil Ref à un instant t3₀ plus tôt qu'elle ne l'atteindrait (instant t3₁) dans le cas d'une charge B.

Le seuil TH du comparateur 441. est choisi pour être supérieur au niveau de tension atteint aux bornes du condensateur 431 à l'ouverture de l'interrupteur K en cas de forte pente du courant (donc de la tension V_{MD}) - Par conséquent, le signal S2 reste au niveau bas L indiquant un état binaire 0 reçu.

Avec une charge plus importante B imposée par le dispositif esclave, la pente du signal V_{MD} est plus faible.

Le seuil Ref du comparateur 435 est choisi pour que, en cas de faible pente du signal V_{MD}, la tension V₄₃₁ aux bornes du condensateur 431 atteigne le seuil TH avant que la tension V_{MD} n'ait pu atteindre le seuil Ref. Par conséquent, le comparateur 441 commute à un instant t4₁, ce qui provoque le passage à l'état haut du signal S2 indiquant un état binaire 1.

Dans un mode de réalisation simplifié, l'amplificateur 41 ne modifie pas sa puissance de sortie et la tension V_{MD} atteint le niveau Ref à l'instant t3₁. L'interrupteur K s'ouvre et la charge du condensateur 431 s'arrête.

Dans le mode de réalisation préféré représenté, la commutation du signal S2 à l'instant t4₁ provoque la commutation de l'amplificateur de sortie 41 (figure 5) vers une puissance supérieure. Par conséquent, on assiste à un changement de pente du front montant du signal V_{MD} (ou I_{W}) qui atteint alors le niveau haut plus rapidement. Il en découle un arrêt plus tôt de la charge du condensateur 431.

A chaque front descendant (instants t2₀, t2₁) du signal S1, le condensateur 431 est réinitialisé (déchargé) par la fermeture de l'interrupteur K'.

Un avantage d'une interruption de la charge du condensateur 431 est que cela réduit la consommation du circuit de détection.

La synchronisation des différents circuits ne pose pas de problème dans la mesure où côté dispositif maître, celui-ci gère la synchronisation non seulement de ses propres circuits mais également du dispositif esclave.

Divers modes de réalisation ont été décrits, diverses variantes et modifications sont à la portée de l'homme du métier. En particulier, le choix des instants de synchronisation et des niveaux de tension et seuils est à la portée de l'homme du métier à partir des indications fonctionnelles données ci-dessus et de l'application. De plus, la mise en oeuvre pratique de l'invention à partir des indications fonctionnelles données ci-dessus est également à sa portée et notamment la réalisation des étages de sortie de l'amplificateur de gains différents. En outre, les états binaires 0 et 1 illustrés sont des conventions et pourront être inversés.

## Revendications

1. Procédé de détermination sous protocole unifilaire, par un premier dispositif (13) adapté à émettre un signal (V_{MD}) à deux états sur une liaison unifilaire (3) à destination d'un deuxième dispositif (14), de l'état binaire d'une donnée émise par le deuxième dispositif sur ladite liaison, **caractérisé en ce que** ledit état est déterminé d'après la pente d'un front montant dudit signal à deux états.

2. Procédé selon la revendication 1, dans lequel la pente est déterminée à partir du niveau de charge d'un élément capacitif (431) à l'apparition d'un front montant.

3. Procédé selon la revendication 2, dans lequel le niveau de charge est comparé à un seuil (TH) pour déterminer l'état reçu.

4. Procédé selon l'une quelconque des revendications 1 à 3, dans lequel la pente du front montant présente une cassure pour un premier état binaire (1) et régulière pour un deuxième état (0).

5. Procédé selon l'une quelconque des revendications 1 à 4, dans lequel le deuxième dispositif (14) module la charge qu'il présente sur la liaison (3) selon l'état binaire qu'il émet.

6. Procédé selon l'une quelconque des revendications 1 à 5, dans lequel ledit signal (V_{MD}) sert de signal d'horloge au deuxième dispositif (14).

7. Procédé selon l'une quelconque des revendications 1 à 6, dans lequel ledit signal (V_{MD}) est modulé en rapport cyclique en fonction de données (SI) à transmettre du premier dispositif (13) vers le deuxième (14).

8. Dispositif (13) d'émission-réception selon protocole unifilaire sur une liaison unifilaire (3), propre à émettre un signal (V_{MD}) à deux états à destination d'un autre dispositif (14) susceptible de modifier la charge qu'il présente sur la liaison selon l'état binaire de données qu'il émet en retour, **caractérisé en ce qu'**il comporte :
un élément (43) de mesure d'une information représentative de la pente des fronts montants dudit signal ; et
un élément (44) de comparaison de ladite information par rapport à un seuil, pour déterminer ledit état binaire.

9. Dispositif selon la revendication 8, comportant en outre un élément de commutation de la puissance d'un amplificateur d'émission (41) dudit signal, activé après détection d'un état correspondant à une charge du deuxième dispositif.

10. Système de transmission bidirectionnelle simultanée sur une liaison unifilaire (3) entre un dispositif maître (13) et un dispositif esclave (14), dans lequel le premier dispositif est adapté à une mise en oeuvre du procédé selon l'une quelconque des revendications 1 à 7.

## Claims

1. A method of determination according to a single-wire protocol, by a first device (13) capable of transmitting a two-state signal (V_{MD}) over a single-wire connection (3) to a second device (14), of the binary state of data transmitted by the second device over said connection, **characterized in that** said state is determined according to the slope of a rising edge of said two-state signal.

2. The method of claim 1, wherein the slope is determined based on the charge level of a capacitive element (431) on occurrence of a rising edge.

3. The method of claim 2, wherein the charge level is compared with a threshold (TH) to determine the received state.

4. The method of any of claims 1 to 3, wherein the slope of the rising edge is broken for a first binary state (1) and even for a second state (0).

5. The method of any of claims 1 to 4, wherein the second device (14) modulates the charge that it exhibits on the connection (3) according to the binary state that it transmits.

6. The method of any of claims 1 to 5, wherein said signal (V_{MD}) is used as a clock signal by the second device (14).

7. The method of any of claims 1 to 6, wherein said signal (V_{MD}) has its duty cycle modulated according to data (S1) to be transmitted from the first device (13) to the second one (14).

8. A device (13) of transmission-reception according to a single-wire protocol over a single-wire connection (3), capable of transmitting a two-state signal (V_{MD}) to another device (14) capable of modifying the charge that it exhibits on the connection according to the binary data state that it transmits in return, **characterized in that** it comprises:
an element (43) for measuring information representative of the slope of the rising edges of said signal; and
an element (44) for comparing said information with a threshold, for determining said binary data state.

9. The device of claim 8, further comprising an element for switching the power of an amplifier (41) for transmitting said signal, which is activated after detection of a state corresponding to a charge of the second device.

10. A system of simultaneous bidirectional transmission over a single-wire connection (3) between a master device (13) and a slave device (14), wherein the first device is adapted to an implementation of the method of any of claims 1 to 7.

## Patentansprüche

1. Ein Verfahren zur Bestimmung gemäß einem Einzeldraht- bzw. Einzelleitungsprotokoll durch eine erste Vorrichtung (13), die in der Lage ist ein Zwei-Zustands-Signal (V_{MD}) über eine Einzeldrahtverbindung (3) zu einer zweiten Vorrichtung (14) zu übertragen,
des Binärzustandes, der durch die zweite Vorrichtung über die erwähnte Verbindung übertragenen Daten, **dadurch gekennzeichnet, dass** dieser Zustand entsprechend der Neigung einer ansteigenden Flanke des erwähnten Zwei-Zustands-Signals bestimmt wird.

2. Verfahren nach Anspruch 1, wobei die Neigung bestimmt wird basierend auf dem Ladungspegel eines kapazitiven Elementes (431) beim Auftreten einer ansteigenden Flanke.

3. Verfahren nach Anspruch 2, wobei der Ladungspegel mit einer Schwelle (TH) verglichen wird, um den Empfangszustand zu bestimmen.

4. Verfahren nach Anspruch 1 bis 3, wobei die Neigung der ansteigenden Flanke für einen ersten Binärzustand (1) unterbrochen ist und gleichmäßig ist für einen zweiten Zustand (0).

5. Verfahren nach Anspruch 1 bis 4, wobei die zweite Vorrichtung (14) die Ladung moduliert, die sich auf der Verbindung (3) gemäß des übertragenen Binärzustands zeigt.

6. Verfahren nach Anspruch 1 bis 5, wobei das erwähnte Signal (V_{MD}) als Taktsignal durch die zweite Vorrichtung (14) verwendet wird.

7. Verfahren nach Anspruch 1 bis 6, wobei das Signal (V_{MD}) einen Duty- bzw. Arbeitszyklus besitzt, und zwar moduliert entsprechend der Daten (S1), die von der ersten Vorrichtung (13) zur zweiten Vorrichtung (14) übertragen werden sollen.

8. Eine Sende-/Empfangsvorrichtung (13) gemäß einem Einzeldrahtprotokoll über eine Einzeldraht- bzw. Einzelleitungsverbindung (3), die in der Lage ist ein Zweizustandssignal (V_{MD}) zu einer weiteren Vorrichtung (14) zu übertragen, die in der Lage ist, die Ladung zu modifizieren, die sich zeigt auf der Verbindung gemäß dem binären Datenzustand, der im Rücklauf übertragen wird,
**dadurch gekennzeichnet, dass** folgendes vorgesehen ist:
ein Element (43) zur Messung der die Neigung der ansteigenden Flanken des Signals repräsentativen Information; und
ein Element (44) zum Vergleichen der erwähnten Information mit einer Schwelle, um den binären Datenzustand zu bestimmen.

9. Vorrichtung nach Anspruch 8, wobei ferner folgendes vorgesehen ist:
ein Schaltelement zum Schalten der Leistung eines Verstärkers (41) zum Übertragen oder Senden des erwähnten Signals, welches aktiviert ist nach der Detektion eines Zustandes entsprechend einer Ladung der zweiten Vorrichtung.

10. System zur simultanen bi-direktionellen Übertragung oder Sendung über eine Einzeldrahtverbindung (3) zwischen einer Hauptvorrichtung (13) und einer nachgeordneten Vorrichtung (14), wobei die erste Vorrichtung angepasst ist an die Implementierung des Verfahrens nach einem der Ansprüche 1 bis 7.
